## Europäisches Patentamt
## European Patent Office
## Office européen des brevets

(19)

(11) Publication number: **0 103 363**
**B1**

(12)

# EUROPEAN PATENT SPECIFICATION

(45) Date of publication of patent specification: **26.11.86**

(51) Int. Cl.⁴: **B 29 C 45/00, B 29 C 45/32**

(21) Application number: **83303844.1**

(22) Date of filing: **01.07.83**

(54) Desynchronized injection sandwich moulding.

(30) Priority: **16.09.82 US 398603**
**15.07.82 US 398606**
**25.10.82 US 436643**

(43) Date of publication of application:
**21.03.84 Bulletin 84/12**

(45) Publication of the grant of the patent:
**26.11.86 Bulletin 86/48**

(84) Designated Contracting States:
**AT BE CH DE FR GB IT LI NL SE**

(56) References cited:
**US-A-3 659 997**
**US-A-3 669 601**
**US-A-3 723 040**
**US-A-3 973 892**

(73) Proprietor: **SORENSEN, Jens Ole**
**P.O. Box 2274**
**Rancho Santa Fe, CA 92067 (US)**

(72) Inventor: **SORENSEN, Jens Ole**
**P.O. Box 2274**
**Rancho Santa Fe, CA 92067 (US)**

(74) Representative: **Wilson, Nicholas Martin et al**
**WITHERS & ROGERS 4 Dyer's Buildings Holborn**
**London EC1N 2JT (GB)**

EP 0 103 363 B1

Courier Press, Leamington Spa, England.

## Description

The invention relates to injection molding of thermoplastic materials and specifically to injection molding employing sandwich molds.

Heretofore injection molding of thermoplastics using a sandwich mold has employed synchronous injection and synchronized opening and closing of the parting surfaces of the sandwich mold and therefore also ejected the molded products synchronously. The means for the synchronous opening and closing is usually a gear system. A sandwich mold operating with synchronous opening and closing usually must open twice as far as a single parting mold, which increases the cycle time of the production. A sandwich mold usually has at least twice as many cavities as a single parting mold, and therefore the injection power needed for injection of all the cavities simultaneously is at least twice as high and may be beyond the capacity of the injection molding machine. Also, the injection volume has to be twice as large and that too, may be beyond the maximum capacity of the machine.

The more cavities a mold has the more difficult it becomes to fill the individual cavities balanced and evenly.

According to one aspect of the present invention there is provided a method of injection molding a thermoplastic material utilizing a combination of sandwich mold and an injection unit which together encompass a feed system with a molten core, the feed system including a first and a second branch and comprising partly a channel system which is at least bifurcated encompassed by the injection unit and partly a first runner system and a second runner system encompassed by the sandwich mold, the first branch including the first runner system with a first runner orifice for feeding a first cooling cavity encompassed by a first parting surface, and the second branch including the second runner system with a second runner orifice for feeding a second cooling cavity encompassed by a second parting surface, the method being characterised by the steps of:

(a) filling the first cavity;

(b) filling the second cavity subsequent to step (a);

(c) desynchronizing the open period of the first parting surface from the open period of the second parting surface;

(d) causing the shut period of the first parting surface to overlap the shut period of the second parting surface; and

(e) filling the cavities encompassed by the first parting surface and the second parting surface in alternate overlapping shut periods respectively.

According to another aspect of the invention there is provided a method of injection molding a thermoplastic material utilizing a combination of a sandwich mold and an injection unit which together encompass a feed system with a molten core, the feed system including a first and a second branch and comprising partly a channel system which is at least bifurcated encompassed by the injection unit and partly a first runner system and a second runner system encompassed by the sandwich mold, the first branch including the first runner system with a first runner orifice for feeding a first cooling cavity encompassed by a first parting surface, and the second branch including the second runner system with a second runner orifice for feeding a second cooling cavity encompassed by a second parting surface, the method being characterised by the steps of:

(a) filling the first cavity;

(b) filling the second cavity subsequent to step (a); and

(c) providing the second branch with a valve which controls passage of molten material to the second cooling cavity; and further characterised in that, step (a) comprises the step of:

(d) injecting, with the valve for controlling the filling of the second cooling cavity shut, whereby the first cooling cavity is filled; step (b) comprises the step of:

(e) injecting, subsequent to step (a) with the valve for controlling the filling of the second cooling cavity open, whereby the second cooling cavity is filled;

(f) the shut period of the first parting surface overlaps the shut period of the second parting surface, and

(g) the filling of the cooling cavities encompassed by both parting surfaces occurs during each of said overlapping shut periods.

The method of desynchronized injection is an advantage because it leaves the full injection power of the machine to fill each set of cooling cavities encompassed by a parting surface. Also the maximum injection volume of the injection molding machine may be a limiting factor, in which case only enough injection volume for a set of cooling cavities encompassed by one parting surface need to be injected at the same time. In such case, it is also easier to fill the individual cavities more balanced and evenly. The injections may be spaced equally apart in time which makes the plasticizing more efficient and homogeneous.

The method of desynchronized open periods is an advantage because the cycletime may usually be shortened in relation to a traditional synchronous method of opening a sandwich mold. Also the maximum opening stroke of the clamping unit may be a limiting factor of the machine, in which case only the one parting surface need open at the time. The openings may be spaced equally in time in which case the packing operation for the molded products may be simplified such as using one robot instead of two. Preferably the first parting surface is normally opened before opening the second parting surface for ejecting the molded product whereby it is possible to adjust the cooling period for each set of cooling cavities so that they are of equal duration.

It is also possible to open the second parting surface before the first parting surface whereby the cooling period for the set of cooling cavities encompassed by the first parting surface receive a longer cooling period than the set of cooling cavities encompassed by the second parting surface. This is an advantage in, for example, a case where lids and bases are produced in each their parting surface, and the bases needing for example a longer cooling period than the lids.

When injection molding a thermoplastic material and employing a runner system with a molten core, the runner becomes pressurized during the injection of the material into the cooling cavities of the mold. After the injection pressure is terminated, the pressure in the molten core is usually depressurized through the injection orifice of the runner system, either due to a partial vacuum created in the injection unit or due to exposing the injection orifice to atmospheric pressure. When the runner system is long it takes longer to pressurize and to depressurize due to the compressibility and the viscosity of the molten material, the last part of the runner system to depressurize being the part furthest away from the injection orifice, which is usually at the gates to the cooling cavities.

If the molten core at the gates to the cooling cavities is still pressurized when the parting line which encompasses the cooling cavity opens, to eject the molded product, some molten material will squirt onto the gate area and possibly into the cooling cavity where it will cool and therefore plug the gate for further injection.

When injection molding and employing sandwich molds which operate with desynchronized injection periods and desynchronized open periods and using a single runner system for the injection the period of time from the end of injection to the opening of the mold, that is the period available for depressurization, is reduced and in some cases as short as one-tenth of a second or even shorter in which case a method of depressurizing the molten core of the runner system is needed.

Also, when operating with desynchronized injection periods and using a single runner system for the injection, the second injection may penetrate into the cooling cavity which was already filled at the first injection and inject an additional layer of plastic material to the produced product particularly when the product is not yet sufficiently solidified. This is especially a problem when the product has a heavy wall thickness, in which case the product will shrink and leave open space in the cooling cavity, to accept the additional layer. It is, therefore, also an object of the invention to solve these problems.

When injecting desynchronously and using more than one runner system in such a way that a valve shuts off injection pressure to the set of cooling cavities which are not being filled, then the molten core of the runner which is not used for injection is not pressurized beyond the valve, whereby the period available for depressurization is not reduced and the injection of an additional layer of plastic material does not occur.

The traditional method of sandwich molding uses a sandwich mold with two parting surfaces and a snorkel which encompasses a part of the runner system and transfers the hot molten thermoplastic from the nozzle of the inection unit to the middle part of the sandwich mold, which is positioned between the two parting surfaces. The snorkel is positioned so that the central axis of the snorkel is identical to the central horizontal axis of the clamping platens of the injection molding machine. It may, in certain circumstances, not be expedient to bring the material into the sandwich mold along the central axis of the clamping platens. Earlier solutions to the problem are described in U.S. Patent 3,663,145 to Teraoka entitled: Synthetic Resin Injection Molding Apparatus: U.S. Patent 3,669,601 to Lainesse entitled: Apparatus for Injection Molding: and U.S. Patents 3,659,997; 3,723,040; and 3,973,892 to Rees entitled Injection Molding Machine with Transverse Feed. All the above mentioned prior art solutions basically deal with transporting the molten material to the top of the mold where it is injected into the mold. The problem with such solutions is that a certain amount of hot molten plastic is bound to drool out at the point where the material leaves the injection unit and enters the mold. Some of this material may drop down and get caught between the parting surfaces, causing production stops and/or damaged molds. Another problem with such solution is that it is very difficult to adapt a standard horizontally operating injection molding machine for injection into the top of a sandwich mold.

Therefore, the invention also includes apparatus for injection molding a thermoplastic material comprising

(a) a sandwich mold;

(b) an injection unit,

(c) a feed system encompassed by the sandwich mold and the injection unit, the feed system including a first and a second branch and comprising partly a channel system which is at least bifurcated encompassed by the injection unit and partly a first runner system and a second runner system encompassed by the sandwich mold, the first branch including the first runner system with a first runner orifice for feeding a first cooling cavity encompassed by a first parting surface, and the second branch including the second runner system with a second runner orifice for feeding a second cooling cavity encompassed by a second parting surface, and characterised by

(d) means for filling the first cavity;

(e) means for filling the second cavity subsequent to the filling of the first cavity;

(f) means for desynchronizing the open period of the first parting surface from the open period of the second parting surface;

(g) means for causing the shut period of the first parting surface to overlap the shut period of the second parting surface; and

(h) means for filling the cavities encompassed by the first parting surface and the second parting surface in alternate overlapping shut periods respectively.

In an alternative arrangement the invention includes apparatus for injecting molding a thermoplastic material comprising

(a) a sandwich mold;

(b) an injection unit,

(c) a feed system encompassed by the sandwich mold and the injection unit, the feed system including a first and a second branch and comprising partly a channel system which is at least bifurcated encompassed by the injection unit and partly a first runner system and a second runner system encompassed by the sandwich mold, the first branch including the first runner system with a first runner orifice for feeding a first cooling cavity encompassed by a first parting surface, and the second branch including the second runner system with a second runner orifice for feeding a second cooling cavity encompassed by a second parting surface, and characterised by

(d) means for filling the first cavity;

(e) means for filling the second cavity subsequent to the filling of the first cavity;

(f) a valve in the second branch which controls passage of molten material to the second cooling cavity;

(g) means for maintaining the valve for controlling the filling of the second cooling cavity shut when the first cooling cavity is filled;

(h) means for opening the valve for controlling the filling of the second cooling cavity open, subsequent to the filling of the first cooling cavity, whereby the second cooling cavity is filled;

(i) means for causing the shut period of the first parting surface to overlap the shut period of the second parting surface, and

(j) means for causing the filling of the cooling cavities encompassed by both parting surfaces to occur during each of said overlapping shut periods.

One example where it is expedient not to bring the material into the sandwich mold along the central axis of the clamping platens is when all the cooling cavities of the sandwich mold are placed substantially on the cental axis of the clamping platens. Another example is when more than one runner system is needed, since both runner systems cannot both be placed on the central axis of the clamping platens. When a runner has more than two parting surfaces, more than one runner system is needed.

It is quite easy to adapt a standard horizontally operating injection molding machine to the method of the invention. A hole may be made in the stationary clamping platen for each snorkel of the invention, or the snorkel may be placed outside the frame of the stationary clamping platen.

The nozzle of a standard horizontally operated injection molding machine is located on the central axis of the clamping platens, but in order to adapt to the invention, either a special nozzle displacer may be used, as is depicted in the drawings of the preferred embodiments, or the injection unit may be displaced for example in a vertical direction, which is a minor change to the machine.

Brief description of the drawings

Figure 1 refers to a first preferred embodiment of the invention and is a schematic diagram showing a partial top view of an injection molding machine and sandwich mold of the invention, the sandwich mold comprises two parting surfaces and two displaced snorkels.

Figure 2A is a partial top sectional view of an injection molding machine and a sandwich mold assembled in such a manner as to operate in accordance with a second preferred embodiment of this invention.

Figure 2B is a partial side sectional view of the injection molding machine and the sandwich mold of Figure 2A taken as indicated by section line B—B.

Figures 3 and 4 are chronological breakdowns into separate functions of the operation of injection molding cycles in accordance with the embodiments of the invention.

First preferred embodiment

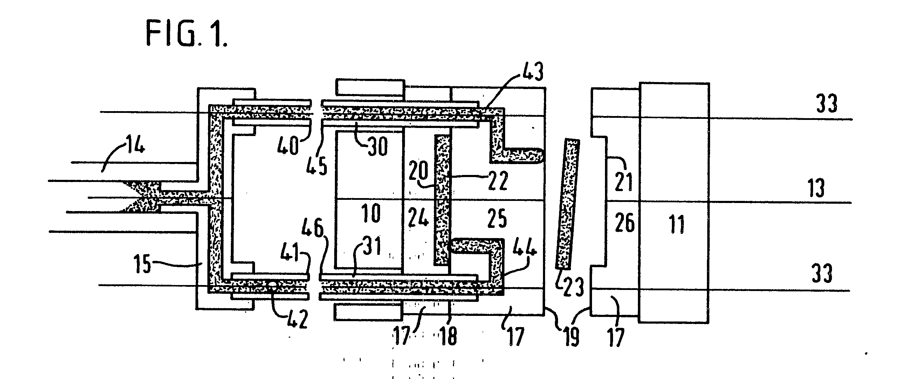

Figure 1 relates to a first preferred embodiment of the invention and shows a partial view of a clamping unit comprising a stationary clamping platen 10 and a movable clamping platen 11 with a central axis 13. Also shown is a partial view of an injection unit 14 comprising a first nozzle 40 and a second nozzle 41, the second nozzle 41 comprises a valve 42 which controls the flow of hot molten plastic from the injection unit 14. Held between the clamping platens 10, 11 is a sandwich mold 17 with a left mold part 24, a middle mold part 25 and a right mold part 26. Separating the left mold part 24 from the middle mold part 25 is a left parting surface 18, and separating the middle mold part 25 from the right mold part 26 is a right parting surface 19.

Encompassed by the left parting surface 18 is a left cooling cavity 20, and encompassed by the right parting surface 19 is a right cooling cavity 21. Also shown is a left molded product 22 enclosed in the left cooling cavity 20 and a right molded product 23 being ejected from the right cooling cavity 21. Connected to the middle mold part is a first snorkel 30 which encompasses a part of a first fluid runner system 43, the rest of the first fluid runner system 43 is encompassed by the middle mold part 25. Also connected to the middle mold part is a second snorkel 31 which encompasses a part of a second fluid runner system 44 the rest of the second fluid runner system 44 is encompassed by the middle mold part 25. The first snorkel 30 comprises the first runner orifice 45, and the snorkel projects from the middle mold part 25 with its orifice 45 toward the first nozzle 40.

Likewise the second snorkel 31 comprises a second runner orifice 46, and the snorkel 31 projects from the middle mold part 25 with its orifice 46 toward the second nozzle 41. Each snorkel 30, 31 has a central axis 33 which is parallel to, positioned displaced from, and with the same elevation as the central axis 13 of the clamping platens 10, 11. Both nozzles 40, 41 are located outside the space which is encompassed by the extended planes of the parting surfaces 18, 19. Both cooling cavities 20, 21 are placed on the central axis 13 of the clamping platens 10, 11. Both snorkels 30, 31 are significantly displaced from the central axis 13 of the clamping platens 10, 11 in order to laterally bypass the left cooling cavity 21. Each runner system 43, 44 feeds only such cooling cavities 20, 21 as are encompassed by one parting surface 18, 19.

Operation of the first preferred embodiment

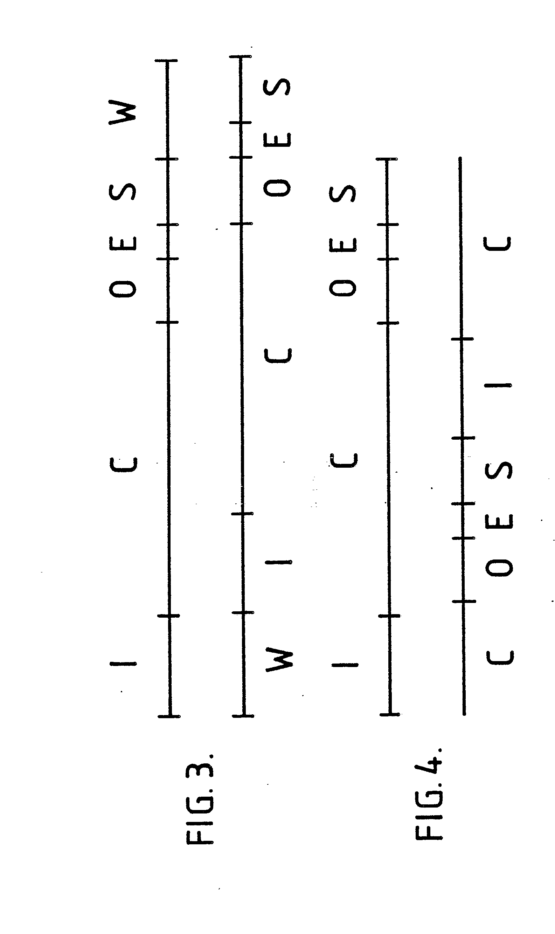

Figure 3 relates to the operation of the first preferred embodiment of the invention and shows the sequence of steps during a production cycle. The upper line of events relates to the right cooling cavity 21 and the lower line of events relates to the left cooling cavity 20.

The symbols I, C, O, E, S and W stand for the periods of injection cooling, opening, ejecting, shutting and waiting, respectively.

The movable clamping platen 11 is moved toward the stationary clamping platen 10, along their central axis 13, whereby both parting surfaces 18, 19 are shut. The injection unit 14 is moved toward the stationary clamping platen 10 whereby the nozzles 40, 41 both seal with the runner orifices 45, 46 respectively. Hot molten plastic is injected from the injection unit 14. The valve 42 is shut. Therefore, the material flows via the nozzle displacer 15, the first nozzle 40, the first snorkel 30 and the first runner system 43 to the right cooling cavity 21 filling the cavity. Meanwhile, the left cooling cavity 22 is in a waiting position. Then the valve 42 is opened and hot molten plastic flows via the nozzle displacer 15, the second nozzle 41, the second snorkel 31 and the second runner system 44 to the left cooling cavity 20 filling the cavity.

Meanwhile the right cooling cavity 21 has started its cooling phase, and after the filling of the left cooling cavity 20, the cavity 20 also starts its cooling phase, and the two molded products 22, 23 are created. Then the movable clamping platen 11 is moved away from the stationary clamping platen 10 along the central axis 13. The left parting surface 18 is kept shut by hydraulic means, not shown, whereby only the right parting surface 19 is opened and the right molded product 23 is ejected. Meanwhile the left cooling cavity 20 is finishing its cooling phase. The middle mold part 25 is moved in a right direction by the hydraulic means, not shown, so that the left parting surface 18 is opened and the right parting surface 19 is shut and the left molded product 22 is ejected. The movable clamping platen 11 is moved toward the stationary clamping platen 10 whereby the left parting surface 18 is also shut, meanwhile the right cooling cavity 21 is in a waiting position. The shut period of the left parting surface 18 overlaps the shut period of the second parting surface 19, and the filling of both cavities 20, 21 occurs during the overlapping period. The open period of the left parting surface 18 is desynchronized from the open period of the right parting surface 19.

Second preferred embodiment

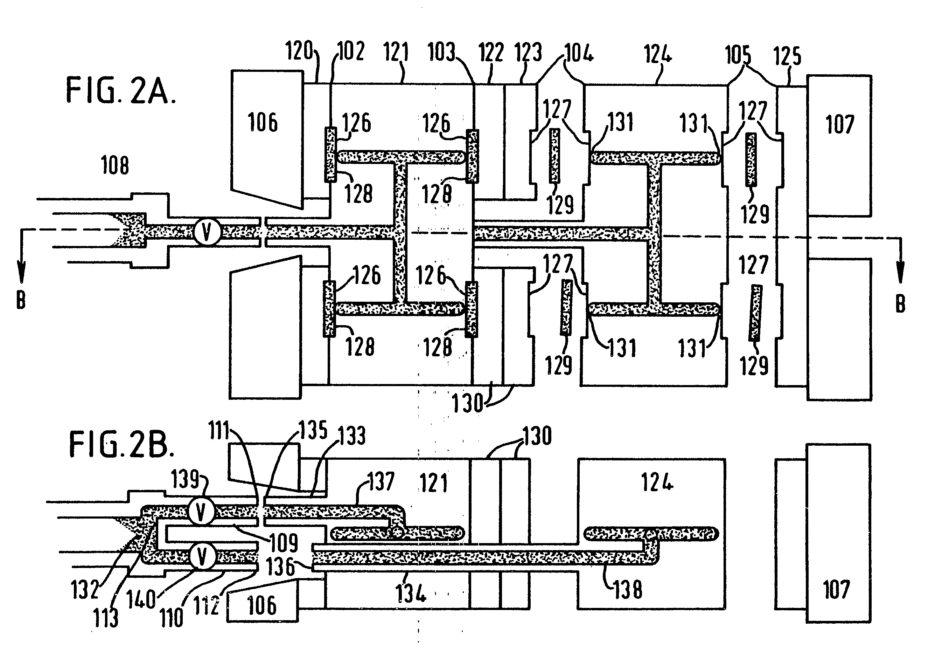

A second preferred embodiment is illustrated in Figures 2A, 2B and Figure 4.

Figure 2A and 2B shows partial views of an injection molding machine with a stacked sandwich mold, or in other words a sandwich mold with four parting surfaces 102, 103, 104 and 105. The injection molding machine comprises an injection unit 108, with an upper nozzle 109 and a lower nozzle 110, with nozzle tips 111 and 112 respectively and a channel system 113 with a molten core. The injection molding machine further comprises a clamping unit with a stationary platen 106 and a moving platen 107 connected by tie bars, not shown. The sandwich mold has a second left part 123, a second middle part 124, and a second right part 125. A first right part 122 is fastened to the second left part 123 to make a center unit 130. A first left parting surface 102 separates first left part 120 and first middle part 121, and a first right parting surface 103 separates first middle part 121 and first right part 122. A second left parting surface 104 separates second left part 123 and a second middle part 124, and a second right parting surface 105 separates second middle part 124 and second right part 125.

Encompassed by the two first parting surfaces 102 and 103 are first cooling cavities 126, and encompassed by the two second parting surfaces 104 and 105 are second cooling cavities 127. Also shown are molded products 128 and 129. First left, middle and right mold parts 120, 121 and 122 are connected by a conventional steering system for sandwich molds, not shown, which synchronize opening and closing of first parting surfaces 102 and 103. Likewise, second left, middle and right mold parts 123, 124 and 125 are connected by a conventional steering system for sandwich molds, not shown, which synchronizes opening and closing of second parting surfaces 104 and 105. Two sets of electromagnets, not shown, alternately attach the center unit 130 to stationary platen 106 or moving platen 107, every time the moving platen 107 opens in relation to the stationary platen 106. Instead of electromagnetic steering, the center unit 130 may be steered by hydraulic cylinders attached to stationary platen 106 or moving platen 107. Many other system for alternately attaching the center unit 130 to the stationary platen 106 or the moving platen 107 are possible. The two middle mold parts 121 and 124 and injection unit 108 in combination encompass a bifurcated feed system 113 for transporting molten material from the injection unit 108 to the cooling cavities 126 and 127 respectively through the gates 131. The bifurcated feed system 113 comprises a stem 132 located in the channel system 113 of the injection unit 108 and two branches, an upper branch and a lower branch, located partly in the injection unit 108 and partly in the two middle parts 121 and 124 of the sandwich mold. An upper snorkel 133 encompasses a part of the upper branch and stretches between the upper nozzle tip 111 and the first middle mold part 121, a lower snorkel 134 encompasses a part of the lower branch and stretches between the lower nozzle tip 112 and the second middle mold part 124. The upper snorkel 133 contains the upper injection orifice 135 of an upper runner system 137 and the lower snorkel 134 contains the lower injection orifice 136 of a lower runner system 138.

During injection the upper nozzle tip 111 forms a seal with the upper injection orifice 135 and the lower nozzle tip 112 forms a seal with the lower injection orifice 136. The upper branch of the feed system which is situated in the injection unit 108 comprises a valve 139 for controlling the feeding of material to the first cavities 126 and the lower branch of the feed system which is situated in the injection unit 108 comprises a valve 140 for controlling the feeding of material to the second cavities 127.

Operation of the second preferred embodiment

Figure 4 shows a chronological breakdown into separate functions of the operation of the embodiment and shows the order of events in a desynchronized cycle of injection molding with two parting surfaces Injection: I, Cooling; C, Opening O, Extended position: E, and Shutting: S. The upper line of events is for the first set of parting surfaces and the lower line of events is for the second set of parting surfaces. The cycle has desynchronized injection periods and desynchronized opening, extended position and closing periods, also the cooling periods are desynchronized.

All parting surfaces 102, 103, 104 and 105 are shut and under clamping pressure. The injection unit 108 is pressurized with the lower valve 140 shut and the upper valve 139 open whereby the first cooling cavities 126 are filled. Shortly after the injection period for the first cooling cavities 126 has ended the lower valve 140 is also opened so that the whole feed system may be depressurized through the two injection orifices 135 and 136. It should here be noted, as will be further explained later, that the lower runner system 138 was at least partly depressurized earlier in the previous cycle. While the first cooling cavities 126 are being filled there will not be injected an additional layer of material into the second cooling cavities 127 which was filled in the previous cycle, since the lower valve 140 was shut at that time. When the cooling period for the second cooling cavities 127 has terminated, the second parting surfaces 104 and 105 opens, eject the molded product 129 during its extended periods, and shuts; during all this time both valves 139 and 140 are open and both the runner systems 137 and 138 will depressurize through the injection orifices 135 and 136. Then the injection unit 108 is again pressurized with now the upper valve 139 shut, and the lower valve 140 open whereby the second cooling cavities 127 are filled. Shortly after the injection period for the second cooling cavities 127 have terminated the upper valve 139 is opened so that both runner systems 137 and 138 may depressurize through the two injection orifices 135 and 136. It should be noted that the upper runner system 137 was at least partly depressurized earlier in the cycle.

While the second cooling cavities 127 are being filled there will not be injected an additional layer of material into the first cooling cavities 126 which were filled earlier in the cycle, since the upper valve 139 was shut at that time. When the cooling period for the first cooling cavities 126 has ended, the first parting surfaces 102 and 103 open, ejects the molded products 128 during their extended period and shut; during all this time both valves 139 and 140 are open, and the runner systems 137 and 138 will depressurize through the injection orifices 135 and 136. The lower runner system 138 will stay at least partly depressurized into the next cycle. During each cycle the moving platen 107 opens twice in relation to the stationary platen 106, each of the parting surfaces 102, 103, 104 and 105 opens once during each cycle and the center mold unit 130 is alternately steered to attach to the stationary platen 106 or the moving platen 107.

It is also possible to operate the system shown in Figure 1 with the cycle shown in Figure 4 and to operate the system shown in Figure 2 with the cycle shown in Figure 3. In the later case the shut period of the first pair of parting surfaces overlaps the shut period of the second pair of parting surfaces, and the filling of the cooling cavities encompassed by both pairs of parting surfaces occur during said overlapping period.

While the above description contains many preferred features these should not be construed as limitations on the scope of the invention, but rather as an exemplification of two preferred embodiments thereof. Many other variations within the scope of the appended claims are possible, for example:

One or more valve(s) of the bifurcated feed system may be positioned in the channel system of the injection unit and/or in the runner system of the sandwich mold or at both locations. There may be many parting surfaces, opening in various synchronous or desynchronous relations to each other, and many valves placed in various places in the feed system which may have many branches and/c stems.

The axis of the injection unit may be vertical or horizontal and/or at right angles to the axis of the clamping unit.

The individual injection periods, opening periods, extended periods or points in time, and closing periods of the different ejection ports may vary from those of the other ejection ports and a total production cycle may be constructed to optimize the various obtainable advantages.

There may be various numbers of snorkels, parting surfaces and cooling cavities used in combination with various production cycles.

Accordingly, the scope of the invention should be determined not by the embodiment illustrated, but by the appended claims. Although the term 'bifurcated' has been used in this specification this is to be interpreted in its broadest sense to embrace two or more branches.

## Claims

1. A method of injection molding a thermoplastic material utilizing a combination of a sandwich mold (120, 121, 122, 123, 124, 125) and an injection unit (108) which together encompass a feed system (113) with a molten core, the feed system (113) including a first and a second branch and comprising partly a channel system which is at least bifurcated encompassed by the injection unit (108) and partly a first runner system (137) and a second runner system (138) encompassed by the sandwich mold, the first branch including the first runner system (137) with a first runner orifice (135) for feeding a first cooling cavity (126) encompassed by a first parting surface (102, 103), and the second branch including the second runner system (138) with a second runner orifice (136) for feeding a second cooling cavity (127) encompassed by a second parting surface (104, 105), the method being characterised by the steps of:
(a) filling the first cavity (126);
(b) filling the second cavity (127) subsequent to step (a);
(c) desynchronizing the open period of the first parting surface (102, 103) from the open period of the second parting surface (104, 105);
(d) causing the shut period of the first parting surface (102, 103) to overlap the shut period of the second parting surface (104, 105);
(e) filling the cavities encompassed by the first parting surface (102, 103) and the second parting surface (104, 105) in alternate overlapping shut periods respectively.

2. A method according to Claim 1 wherein the sandwich mold (120, 121, 122, 123, 124, 125) comprises a first pair of parting surfaces (102, 103) and a second pair of parting surfaces (104, 105), the method being further characterised by the steps of;
(f) synchronizing the open period of the parting surfaces of each pair; and
(g) desynchronizing the open period of the parting surfaces of the different pairs.

3. A method according to Claim 1 wherein the sandwich mold (120, 121, 122, 123, 124, 125) comprises a first pair of parting surfaces (102, 103) and a second pair of parting surfaces (104, 105) and wherein the shut period of the first pair of parting surfaces (102, 103) overlaps the shut period of the second pair of parting surfaces (104, 105), the method further comprising the step of:
(h) filling the cavities (126, 127) encompassed by the first pair of parting surfaces (102, 103) and the second pair of parting surfaces (104, 105) in alternate overlapping shut periods respectively.

4. A method of injection molding a thermoplastic material utilizing a combination of a sandwich mold (17) and an injection unit (14) which together encompass a feed system with a molten core, the feed system including a first and a second branch and comprising partly a channel system which is at least bifurcated encompassed by the injection unit (14) and partly a first runner system (43) and a second runner system (44) encompassed by the sandwich mold, the first branch including the first runner system with a first runner orifice (45) for feeding a first cooling cavity (21) encompassed by a first parting surface (19), and the second branch including the second runner system (44) with a second runner orifice (46) for feeding a second cooling cavity (20) encompassed by a second parting surface (18), the method being characterised by the steps of:
(a) filling the first cavity (21);
(b) filling the second cavity (20) subsequent to step (a); and
(c) providing the second branch with a valve (42) which controls passage of molten material to the second cooling cavity (20); and further characterised in that, step (a) comprises the step of:
(d) injecting, with the valve (42) for controlling the filling of the second cooling cavity (20) shut, whereby the first cooling cavity (21) is filled; step (b) comprises the step of:
(e) injecting, subsequent to step (a) with the valve (42) for controlling the filling of the second cooling cavity (20) open, whereby the second cooling cavity (20) is filled;
(f) the shut period of the first parting surface (19) overlaps the shut period of the second parting surface (18), and
(g) the filling of the cooling cavities (20, 21) encompassed by both parting surfaces (18, 19) occurs during each of said overlapping shut periods.

5. A method according to Claim 4 wherein the sandwich mold (17) comprises a first pair of parting surfaces (19) and a second pair of parting surfaces (18) and wherein the shut period of the first pair of parting surfaces overlaps the shut period of the second pair of parting surfaces and wherein the filling of the cooling cavities (21, 20) encompassed by both pairs of parting surfaces occurs during each of said overlapping shut periods, the method further comprising the step of:
(h) filling the cavities (21) encompassed by the first pair of parting surfaces (19) prior to filling the cavities (20) which are encompassed by the second pair of parting surfaces (18).

6. A method according to any one of the preceding claims wherein the sandwich mold (17: 120, 121, 122, 123, 124, 125) comprises a snorkel (30, 31: 133, 134) which encompasses at least a part of a said runner system (43, 44: 137, 138), and the snorkel (30, 31: 133, 134) comprises the runner orifice (45, 46: 135, 136) and projects with the orifice toward a nozzle (40, 41: 111, 112) of the injection unit (14: 108), the method comprising the further step of:

sealing the nozzle (40, 41; 111, 112) with the runner orifice (45, 46: 135, 136) by horizontal relative movement of the snorkel and/or the nozzle.

7. Apparatus for injection molding a thermoplastic material comprising

(a) a sandwich mold (120, 121, 122, 123, 124, 125),

(b) an injection unit (108),

(c) a feed system encompassed by the sandwich mold and the injection unit, the feed system including a first and a second branch and comprising partly a channel system which is at least bifurcated encompassed by the injection unit (108) and partly a first runner system (137) and a second runner system (138) encompassed by the sandwich mold, the first branch including the first runner system (137) with a first runner orifice (135) for feeding a first cooling cavity (126) encompassed by a first parting surface (102, 103), and the second branch including the second runner system (138) with a second runner orifice (136) for feeding a second cooling cavity (127) encompassed by a second parting surface (104, 105), and characterised by

(d) means for filling the first cavity (126);

(e) means for filling the second cavity (127) subsequent to the filling of the first cavity (126);

(f) means for desynchronizing the open period of the first parting surface (102, 103) from the open period of the second parting surface (104, 105);

(g) means for causing the shut period of the first parting surface (102, 103) to overlap the shut period of the second parting surface (104, 105);

(h) means for filling the cavities (126, 127) encompassed by the first parting surface (102, 103) and the second parting surface (104, 105) in alternate overlapping shut periods respectively.

8. Apparatus for injection molding a thermoplastic material comprising

(a) a sandwich mold (17);

(b) an injection unit (14),

(c) a feed system encompassed by the sandwich mold and the injection unit, the feed system including a first and a second branch and comprising partly a channel system which is at least bifurcated encompassed by the injection unit (14) and partly a first runner system (43) and a second runner system (44) encompassed by the sandwich mold (17), the first branch including the first runner system (43) with a first runner orifice (45) for feeding a first cooling cavity (21) encompassed by a first parting surface (19), and the second branch including the second runner system (44) with a second runner orifice (46) for feeding a second cooling cavity (20) encompassed by a second parting surface (18), and characterised by

(d) means for filling the first cavity (21);

(e) means for filling the second cavity (20) subsequent to the filling of the first cavity (21);

(f) a valve (42) in the second branch which controls passage of molten material to the second cooling cavity (20);

(g) means for maintaining the valve (42) for controlling the filling of the second cooling cavity (20) shut when the first cooling (21) is filled;

(h) means for opening the valve (42) for controlling the filling of the second cooling cavity (20), subsequent to the filling of the first cooling cavity (21), whereby the second cooling cavity is filled;

(i) means for causing the shut period of the first parting surface (19) to overlap the shut period of the second parting surface (18), and

(j) means for causing the filling of the cooling cavities (20, 21) encompassed by both parting surfaces (18, 19) to occur during each of said overlapping shut periods.

9. Apparatus according to Claim 7 or 8 characterised by clamping platens (10, 11: 106, 107) for the sandwich mold, and a snorkel (30, 31: 133, 134) which encompasses at least a part of the runner system (43, 44: 137, 138), the snorkel (30, 31: 133, 134) comprising the runner orifice (45, 46: 135, 136) and projecting with the orifice towards a nozzle (40, 41; 111, 112) of the injection unit (14: 108), and the snorkel (30, 31: 133, 134) having a central axis which is substantially parallel to, and displaced from, the central axis of the clamping platens (10, 11: 106, 107).

10. Apparatus according to Claim 9 wherein all cooling cavities (20, 21) of the sandwich mold (17) are placed substantially on said central axis of the clamping platens (10, 11),˙so that each parting surface (18, 19) only encompasses one cooling cavity (20, 21) snorkel (30, 31) being displaced from the central axis of the clamping platens (10, 11) by a sufficient distance to laterally bypass at least one of the cooling cavities, which is/are placed substantially on said central axis of clamping platens.

11. Apparatus according to Claim 9 or 10 wherein the nozzle (40, 41: 111, 112) is located outside of the space which is encompassed by the extended planes of the parting surfaces (18, 19: 102, 103, 104, 105), the nozzle being sealed with the runner orifices (45, 46: 135, 136) by horizontal relative movement of the snorkel and the nozzle.

**Patentansprüche**

1. Verfahren zum Spritzgießen eines thermoplastischen Materials unter Verwendung einer Kombination aus einer Sandwich-Form (120, 121, 122, 123, 124, 125) und einer Einspritzeinheit (108), die gemeinsam ein Zuführsystem (113) mit einem geschmolzenen Kern einschließen, wobei das Zuführsystem (113) einen ersten und einen zweiten Zweig einschließt und teilweise ein Kanalsystem, das wenigstens gabelförmig von der Einspritzeinheit (108) umschlossen ist, und teilweise ein erstes Gießkanalsystem (137) und ein zweites Gießkanalsystem (138), das von der Sandwich-Form umschlossen ist, umfaßt, wobei der erste Zweig das erste Gießkanalsystem (137) mit einer ersten Gießkanalöffnung (135) zur Speisung eines von einer ersten Trennfläche (102, 103) umschlossenen ersten kühlenden Hohlraums (126) einschließt, und wobei der zweite Zweig das zweite Gießkanalsystem (138) mit einer zweiten Gießkanalöffnung (136) zur Speisung eines von einer zweiten Trennfläche (104, 105) umschlossenen zweiten kühlenden Hohlraums (127) einschließt, wobei das Verfahren durch die Schritte gekennzeichnet ist:

(a) Füllen des ersten Hohlraums (126);

(b) Füllen des zweiten Hohlraums (127) im Anschluß an Schritt (a);

(c) Entsynchronisieren der Öffnungsperiode der ersten Trennfläche (102, 103) von der Öffnungsperiode der zweiten Trennfläche (104, 105);

(d) Bewirken, daß die Schließperiode der ersten Trennfläche (102, 103) sich mit der Schließperiode der zweiten Trennfläche (104, 105) überlappt;

(e) Füllen der von der ersten Trennfläche (102, 103) und der zweiten Trennfläche (104, 105) umschlossenen Hohlräume jeweils in abwechselnden sich überlappenden Schließperioden.

2. Verfahren nach Anspruch 1, bei dem die Sandwich-Form (120, 121, 122, 123, 124, 125) ein erstes Paar von Trennflächen (102, 103) und ein zweites Paar von Trennflächen (104, 105) enthält, wobei das Verfahren ferner durch die Schritte gekennzeichnet ist:

(f Synchronisieren der Öffnungsperiode der Trennflächen jedes Paares; und

(g) Entsynchronisieren der Öffnungsperiode der Trennflächen der verschiedenen Paare.

3. Verfahren nach Anspruch 1, bei dem die Sandwich-Form (120, 121, 122, 123, 124, 125) ein erstes Paar von Trennflächen (102, 103) und ein zweites Paar von Trennflächen (104, 105) enthält, und bei dem die Schließperiode des ersten Paares von Trennflächen (102, 103) sich mit der Schließperiode des zweiten Paares von Trennflächen (104, 105) überlappt, wobei das Verfahren den weiteren Schritt umfaßt:

(h) Füllen der von dem ersten Paar von Trennflächen (102, 103) und den zweiten Paar von Trennflächen (104, 105) jeweils in abwechselnden sich überlappenden Schließperioden.

4. Verfahren zum Spritzgießen eines thermoplastischen Materials unter Verwendung einer Kombination aus einer Sandwich-Form (17) une einer Einspritzeinheit (14), die zusammen ein Zuführsystem mit einem geschmolzenen Kern einschließen, wobei das Zuführsystem einen ersten und einen zweiten Zweig einschließt und teilweise ein Kanalsystem, das wenigstens gabelförmig von der Einspritzeinheit (14) umschlossen ist und teilweise ein erstes Gießkanalsystem (43) und ein zweites Gießkanalsystem (44), das von der Sandwich-Form umschlossen ist, umfaßt, wobei der erste Zweig das erste Gießkanalsystem mit einer ersten Gießkanalöffnung (45) zur Speisung eines von einer ersten Trennfläche (19) umschlossenen ersten kühlenden Hohlraums (21) einschließt, und wobei der zweite Zweig das zweite Gießkanalsystem (44) mit einer zweiten Gießkanalöffnung (46) zur Speisung eines von einer zweiten Trennfläche (18) umschlossenen zweiten kühlenden Hohlraums (20) einschließt, wobei das Verfahren durch die Schritte gekennzeichnet ist:

(a) Füllen des ersten Hohlraums (21);

(b) Füllen des zweiten Hohlraums (20) imι Anschluß an Schritt (a);

(c) Versehen des zweiten Zweiges mit einem Ventil (42), das den Durchlaß von geschmolzenem Material zum zweiten kühlenden Hohlraum (20) steuert, und ferner gekennzeichnet, dadurch, daß der Schritt (a) die Schritte enthält:

(d) Einspritzen bei geschlossenem Ventil (42) zur Steuerung der Füllung des zweiten kühlenden Hohlraums (20), wodurch der erste kühlende Hohlraum gefüllt wird;
daß der Schritt (b) die Schritte enthält:

(e) Einspritzen bei geöffnetem Ventil (42) zur Steuerung der Füllung des zweiten kühlenden Hohlraums (20), wodurch der zweite kühlende Hohlraum (20) gefüllt wird;

(f) die Schließperiode der ersten Trennfläche (10) überlappt die Schließperiode der zweiten Trennfläche (18) und

(g) gas Füllen der kühlenden Hohlräume (20, 21), die von beiden Trennflächen (18, 19) umschlossen werden, tritt während jeder der genannten überlappenden Schließperioden ein.

5. Verfahren nach Anspruch 4, bei dem die Sandwich-Form (17) ein erstes Paar von Trennflächen (19) und ein zweites Paar von Trennflächen (18) enthält, und bei dem die Schließperiode des ersten Paares von Trennflächen die Schließperiode des zweiten Paares von Trennflächen überlappt, und bei dem das Füllen der von beiden Paaren von Trennflächen umschlossenen kühlenden Hohlräume (21, 20) während jeder der genannten überlappenden Schließperioden erfolgt, wobei das Verfahren ferner den Schritt umfaßt:

(h) Füllen der von dem ersten Paar von Trennflächen (19) umschlossenen Hohlräume (21) vor dem Füllen der Hohlräume (20), die von dem zweiten Paar von Trennflächen (18) umschlossen sind.

6. Verfahren nach einem der vorhergehenden Ansprüche, bei dem die Sandwich-Form (17; 120, 121, 122, 123, 124, 125) einen Schnorchel (30, 31; 133, 134) enthält, der wenigstens einen Teil eines genannten Gießkanalsystems (43, 44; 137, 138) unschließt, und wobei der Schnorchel (30, 31; 133, 134) die Gießkanalöffnung (45, 46; 111, 112) enthält und mit der Öffnung in Richtung auf eine Düse (40, 41; 111, 112) der Einspritzeinheit (14; 108) vorsteht, wobei das Verfahren den weiteren Schtitt umfaßt:

Abdichtung der Düse (40, 41; 111, 112) mit der Gießkanalöffnung (45, 46; 135, 136) durch horizontale Relativbewegung des Schnorchels und/oder der Düse.

7. Gerät zum Spritzgießen eines thermoplastischen Materials, umfassend:

(a) eine Sandwich-Form (120, 121, 122, 123, 124, 125);

(b) eine Einspritzeinheit (108);

(c) ein von der Sandwich-Form und der Einspritzeinheit umschlossenes Zuführsystem, wobei das Zuführsystem einen ersten und einen zweiten Zweig einschließt und teilweise ein Kanalsystem, das wenigstens gabelförmig von der Einspritzeinheit (108) umschlossen ist, und teilweise ein erstes Gießkanalsystem (137) und ein zweites Gießkaalsystem (138), das von der Sandwich-Form umschlossen ist, umfaßt, wobei der erste Zweig das erste Gießkanalsystem (137) mit einer ersten Gießkanalöffnung (135) zur Speisung eines von einer ersten Trennfläche (102, 103) umschlossenen ersten kühlenden Hohlraums (126) einschließt, und wobei der zweite Zweig das zweite Gießkanalsystem (138) mit einer zweiten Gießkanalöffnung (136) zur Speisung eines von einer zweiten Trennfläche (104, 105) umschlossenen zweiten kühlenden Hohlraums (127) einschließt, und gekennzeichnet durch:

(d) Mittel zum Füllen des ersten Hohlraums (126);

(e) Mittel zum Füllen des zweiten Hohlraums (127) nach dem Füllen des ersten Hohlraums (126);

(f) Mittel zum Entsynchronisieren der Öffnungsperiode der ersten Trennfläche (102, 103) von der Öffnungsperiode der zweiten Trennfläche (104, 105);

(g) Mittel, die bewirken, daß die Schließperiode der ersten Trennfläche (102, 103) sich mit der Schließperiode der zweiten Trennfläche (104, 105) überlappt;

(h) Mittel zum Füllen der von der ersten Trennfläche (102, 103) und der zweiten Trennfläche (104, 105) umschlossenen Hohlräume (126, 127) jeweils in abwechselnden sich überlappenden Schließperioden.

8. Gerät zum Spritzgießen eines thermoplastischen Materials, umfassend:

(a) eine Sandwich-Form (17);

(b) eine Einspritzeinheit (14);

(c) ein von der Sandwich-Form und der Einspritzeinheit umschlossenes Zuführsystem, wobei das Zuführsystem einen ersten und einen zweiten Zweig einschließt und teilweise ein Kanalsystem, das wenigstens gabelförmig von der Einspritzeinheit (14) umschlossen ist, und teilweise ein erstes Gießkanalsystem (43) und ein zweites Gießkanalsystem (44), das von der Sandwich-Form (17) umschlossen ist, umfaßt, wobei der erste Zweig das erste Gießkanalsystem (43) mit einer ersten Gießkanalöffnung (45) zur Speisung eines von einer ersten Trennfläche (19) umschlossenen ersten kühlenden Hohlraums (21) einschließt, und wobei der zweite Zweig das zweite Gießkanalsystem (44) mit einer zweiten Gießkanalöffnung (46) zur Speisung eines von einer zweiten Trennfläche (18) umschlossenen zweiten kühlenden Hohlraums (20) einschließt, gekennzeichnet durch:

(d) Mittel zum Füllen des ersten Hohlraums (21);

(e) Mittel zum Füllen des zweiten Hohlraums (20) nach dem Füllen des ersten Hohlraums (21);

(f) ein Ventil (42) in dem zweiten Zweig, das den Durchlaß des geschmolzenen Materials zu dem zweiten kühlenden Hohlraum (20) steuert;

(g) Mittel, um das Ventil (42) zum Steuern des Füllens des zweiten kühlenden Hohlraums (20) geschlossen zu halten, wenn der ersten kühlende Hohlraum (21) gefüllt wird;

(h) Mittel zum Öffnen des Ventils (42) zur Steuerung des Füllens des zweiten kühlenden Hohlraums (20) nach dem Füllen des ersten kühlenden Hohlraums (21), wodurch der zweite kühlende Hohlraum (20) gefüllt wird;

(i) Mittel, um zu bewirken, daß die Schließperiode der ersten Trennfläche (19) sich mit der Schließperiode der zweiten Trennfläche (18) überlappt, und

(j) Mittel, um zu bewirken, daß das Füllen der von den beiden Trennflächen (18, 19) umschlossenen kühlenden Hohlräume (20, 21) während jeder der genannten überlappenden Schließperioden erfolgt.

9. Gerät nach Anspruch 7 oder 8, gekennzeichnet durch Klemmplatten (10, 11; 106, 107) für die Sandwich-Form und einen Schnorchel (30, 31; 133, 134), der wenigstens einen Teil des Gießkanalsystems (43, 44; 137, 138) umschließt, wobei der Schnorchel (30, 31; 133, 134) die Gießkanalöffnung (45, 46; 135, 136) enthält, und mit der Öffnung in Richtung auf eine Düse (40, 41; 111, 112) der Einspritzeinheit (14; 18) vorsteht, und wobei der Schnorchel (30, 31; 133, 134) eine zentrale Achse aufweist, die weitgehend parallel zur Mittelachse der Klemmplatten (10, 11; 106, 107) und versetzt zu dieser verläuft.

10. Gerät nach Anspruch 9, bei dem alle kühlenden Hohlräume (20, 21) der Sandwich-Form (17) im wesentlichen auf der genannten Mittelachse der Klemmplatten (10, 11) angeordnet sind, so daß jede Trennfläche (18, 19) nur einen kühlenden Hohlraum (20, 21) umschließt, und wobei ein Schnorchel (30, 21) von der Mittelachse der Klemmplatten (10, 11) in einem ausreichenden Abstand versetzt ist, um seitlich wenigstens einen der kühlenden Hohlräume zu umgehen, der im wesentlichen auf der genannten Mittelachse der Klemmplatten angeordnet ist.

11. Gerät nach Anspruch 9 oder 10, bei dem die Düse (40, 41; 111, 112) außerhalb des Raumes angeordnet ist, der von den ausgedehnten Ebenen der Trennflächen (18, 19; 102, 103, 104, 105) umschlossen wird, wobei die Düse mit den Gießkanalöffnungen (45, 46; 135, 136) durch horizontale Relativebewegung des Schnorchels und der Düse abgedichtet wird.

**Revendications**

1. Procédé de moulage par injection d'un matériau thermoplastique utilisant une combinaison d'un moule sandwich (120, 121, 122, 123, 124, 125) et d'une unité d'injection (108) qui renferment ensemble un système d'alimentation (113) avec un centre en fusion, le système d'alimentation (113) comprenant une première et une seconde branches et comprenant, partiellement, un système de canaux englobés au moins dans sa partie di bifurcation par l'unité d'injection (108) et, partiellement, un premier système de chenal de coulée (137) et un second système de chenal de coulée (138) englobés par le moule sandwich, la première branche comprenant le premier système de chenal de coulée (137) avec un premier orifice de coulée (135) pour alimenter une première cavité de refroidissement (126) délimitée par une première surface de séparation (102, 103) et la seconde branche comprenant le second système de chenal de coulée (138) avec un second orifice de coulée (136) pour alimenter une seconde cavité de refroidissement (127) délimitée par une seconde surface de séparation (104, 105), ce procédé étant caractérisé par les étapes consistant à:

a) remplir la première cavité (126);

b) remplir la seconde cavité (127) à la suite de l'étape (a);

c) désynchroniser la période d'ouverture de la première surface de séparation (102, 103) de la période d'ouverture de la seconde surface de séparation (104, 105);

d) provoquer le recouvrement de la période de fermeture de la seconde surface de séparation (104, 105) par la période de fermeture de la première surface de séparation (102, 103);

e) remplir les cavités délimitées par la première surface de séparation (102, 103) et la seconde surface de séparation (104, 105) dans des périodes de fermeture respectives se recouvrant alternativement.

2. Procédé selon la revendication 1, dans lequel le moule sandwich (120, 121, 122, 123, 124, 125) comprend une première paire de surfaces de séparation (102, 103) et une seconde paire de surfaces de séparation (104, 105), caractérisé en ce qu'il comprend en outre les étapes consistant à:

f) synchroniser la période d'ouverture des surfaces de séparation de chaque paire et

g) désynchroniser la période d'ouverture des surfaces de séparation des différentes paires.

3. Procédé selon la revendication 1, dans lequel le moule sandwich (120, 121, 122, 123, 124, 125) comprend une première paire de surfaces de séparation (102, 103) et une seconde paire de surfaces de séparation (104, 105) et dans lequel la période de fermeture de la première paire de surfaces de séparation (102, 103) recouvre la période de fermeture de la seconde paire de surfaces de séparation (104, 105), caractérisé en ce qu'il comprend en outre l'étape consistant à:

h) remplir les cavités (126, 127) délimitées par la première paire de surfaces de séparation (102, 103) et par la seconde paire de surfaces de séparation (104, 105) en des périodes de fermeture respectives se recouvrant alternativement.

4. Procédé de moulage par injection d'un matériau thermoplastique utilisant une combinaison d'un moule sandwich (17) et d'une unité d'injection (14) qui renferment ensemble un système d'alimentation avec un centre en fusion, le système d'alimentation comprenant une première et une seconde branches et comprenant, partiellement, un système de canaux englobé au moins dans sa partie de bifurcation par l'unité d'injection (14) et, partiellement, un premier système de chenal de coulée (43) et un second système de chenal de coulée (44) englobés par le moule sandwich, la première branche comprenant le premier système de chenal de coulée avec un premier orifice de coulée (45) pour alimenter une première cavité de refroidissement (21) délimitée par une première surface de séparation (19) et la seconde branche comprenant le second système de chenal de coulée (44) avec un second orifice de coulée (46) pour alimenter une seconde cavité de refroidissement (20) délimitée par une seconde surface de séparation (18), ce procédé étant caractérisé en ce qu'il comprend les étapes consistant à:

a) remplir la première cavité (21);

b) remplir la seconde cavité (20) à la suite de l'étape (a), et

c) munir la seconde branche d'une valve (42) qui contrôle le passage de matériau fondu vers la seconde cavité de refroidissement (20) étant en outre caractérisé en ce que l'étape (a) comprend l'étape consistant à:

d) injecter, avec la valve (42) de contrôle du remplissage de la seconde cavité de refroidissement en position fermée, ce qui permet de remplir la première cavité de refroidissement (21), et en ce que l'étape (b) comprend les étapes consistant à:

e) injecter, suite à l'étape (a), avec la valve (42) de contrôle du remplissage de la seconde cavité de refroidissement (20) à l'état ouvert, ce qui permet de remplir la seconde cavité de refroidissement (20);

f) faire recouvrir la période de fermeture de la seconde surface de séparation (18) par la période de fermeture de la première surface de séparation (19) et

g) remplir les cavités de refroidissement (20, 21) délimitées par les deux surfaces de séparation (18, 19), ce remplissage se produisant pendant chacune des périodes de fermeture se recouvrant.

5. Procédé selon la revendication 4, dans lequel le moule sandwich (17) comprend une première paire de surfaces de séparation (19) et une seconde paire de surfaces de séparation (18) et dans lequel la période de fermeture de la première paire de surfaces de séparation recouvre la période de fermeture de la seconde paire de surfaces de séparation et dans lequel le remplissage des cavités de refroidissement (21, 20) délimitées par les deux paires de surfaces de séparation se produit pendant chacune des périodes de fermeture se recouvrant, caractérisé en ce qu'il comprend en outre l'étape consistant à:

h) remplir les cavités (21) délimitées par la première paire de surfaces de séparation (19) avant de remplir les cavités (20) qui sont délimitées par la seconde paire de surfaces de séparation (18).

6. Procédé selon l'une quelconque des revendications précédentes, dans lequel le moule sandwich (17: 120, 121, 122, 123, 124, 125) comprend un snorkel (30, 31; 133, 134) qui englobe au moins une partie du système de chenal de coulée (43, 44; 137, 138), et dans lequel le snorkel (30, 31; 133, 134) comprend l'orifice de coulée (45, 46; 135, 136) et se projette avec l'orifice vers un injecteur (40, 41; 111, 112) de l'unité d'injection (14; 108), ce procédé étant caractérisé en ce qu'il comprend l'étape ultérieure consistant à:

obturer l'injecteur (40, 41; 111, 112) avec l'orifice de coulée (45, 46; 135, 136) par le déplacement horizontal relatif du snorkel et/ou de l'injecteur.

7. Dispositif de moulage par injection d'un matériau thermoplastique comprenant:

a) un moule sandwich (120, 121, 122, 123, 124, 125),

b) une unité d'injection (108),

c) un système d'alimentation englobé par le moule sandwich et l'unité d'injection, le système d'alimentation comprenant une première et une seconde branches et comprenant, partiellement, un système de canaux qui est englobé au moins dans sa partie de bifurcation, par l'unité d'injection (108) et, partiellement, un premier système de chenal de coulée (137) et un second système de chenal de coulée (138) englobés par le moule sandwich, la première branche comprenant le premier système de chenal de coulée (137) avec un premier orifice de coulée (135) pour alimenter une première cavité de refroidissement (126) délimitée par une première surface de séparation (102, 103) et la seconde branche comprenant le second système de chenal de coulée (138) avec un second orifice de coulée (136) pour alimenter une seconde cavité de refroidissement (127) délimitée par une seconde surface de séparation (104, 105), et caractérisé en ce qu'il comprend:

d) des moyens de remplissage de la première cavité (126);

e) des moyens de remplissage de la seconde cavité (127) suite au remplissage de la première cavité (126);

f) des moyens pour désynchroniser la période d'ouverture de la première surface de séparation (102, 103) de la période d'ouverture de la seconde surface de séparation (104, 105);

g) des moyens pour causer le recouvrement de la période de fermeture de la seconde surface de séparation (104, 105) par la période de fermeture de la première surface de séparation (102, 103);

h) des moyens de remplissage des cavités (126, 127) délimitées par la première surface de séparation (102, 103) et la seconde surface de séparation (104, 105) dans des périodes de fermeture respectives se recouvrant alternativement.

8. Dispositif de moulage par injection d'un matériau thermoplastique comprenant:

a) un moule sandwich (17);

b) une unité d'injection (14);

c) un système d'alimentation englobé par le moule sandwich et l'unité d'injection, le système d'alimentation comprenant une première et une seconde branches et comprenant, partiellement, un système de canaux qui est englobé au moins dans sa partie de bifurcation par l'unité d'injection (14) et, partiellement, un premier système de chenal de coulée (43) et un second système de chenal de coulée (44) englobés par le moule sandwich (17), la première branche comprenant le premier système de chenal de coulée (43) avec un premier orifice de coulée (45) pour alimenter une première cavité de refroidissement (21) délimitée par une première surface de séparation (19) et la seconde branche comprenant le second système de chenal de coulée (44) avec un second orifice de coulée (46) pour alimenter une seconde cavité de refroidissement (20) délimitée par une seconde surface de séparation (18), caractérisé en ce qu'il comprend:

d) des moyens de remplissage de la première cavité (21);

e) des moyens de remplissage de la seconde cavité (20) suite au remplissage de la première cavitée (21);

f) une valve (42) dans la seconde branche qui contrôle le passage de matériau fondu vers la seconde cavité de refroidissement (20);

g) des moyens pour maintenir fermée la valve (42) de contrôle de remplissage de la seconde cavité de refroidissement (20) lorsque la première cavité de refroidissement (21) est remplie;

h) des moyens d'ouverture de la valve (42) pour contrôler le remplissage de la seconde cavité de refroidissement (20) suite au remplissage de la première cavité de refroidissement (21), à la suite de quoi la seconde cavité de refroidissement est remplie;

i) des moyens pour provoquer le recouvrement de la période de fermeture de la seconde surface de sépration (18) par la période de fermeture de la première surface de séparation (19), et

j) des moyens pour provoquer le remplissage des cavités de refroidissement (20, 21) englobées par les deux surfaces de séparation (18, 19) pendant chacune des périodes de fermeture se recouvrant.

9. Dispositif selon l'une des revendications 7 ou 8, caractérisé en ce qu'il comprend des platines de serrage (10, 11; 106, 107) pour le moule sandwich et un snorkel (30, 31; 133, 134) qui englobe au moins une partie du système de chenal de coulée (43, 44; 137, 138), le snorkel (30, 31; 133, 134) comprenant l'orifice de coulée (45, 46); 135, 136) et se projetant avec l'orifice en direction d'un injecteur (40, 41; 111, 112) de l'unité d'injection (14; 108) et le snorkel (30, 31; 133, 134) ayant un axe central qui est sensiblement parallèle mais décalé par rapport à l'axe central des platines de serrage (10, 11; 106, 107).

10. Dispositif selon la revendication 9, caractérisé en ce que toutes les cavités de refroidissement (20, 21) du moule sandwich (17) sont placées sensiblement sur l'axe central des platines de serrage (10, 11), de sorte que chaque surface de séparation (18, 19) délimite seulement une cavité de refroidissement (20, 21), un snorkel (30, 31) étant décalé par rapport à l'axe central des platines de serrage (10, 11) par une distance suffisante pour dériver latéralement au moins l'une des cavités de refroidissement qui est/sont placée(s) sensiblement sur cet axe central des platines de serrage.

11. Dispositif selon la revendication 10, caractérisé en ce que l'injecteur (40, 41; 111, 112) est situé en dehors de l'espace qui est délimité par les plans des surfaces de séparation (18, 19; 102, 103, 104, 105), l'injecteur étant obturé par les orifices de coulé (45, 46; 135, 136) par un déplacement horizontal relatif de snorkel et de l'injecteur.

FIG. 1.

FIG. 2A.

FIG. 2B.

2

FIG. 3.

FIG. 4.